# EUROPEAN PATENT SPECIFICATION

(11) **EP 4 223 143 B1**
(45) Date of publication and mention of the grant of the patent: **03.04.2024**
(21) Application number: 22155205.2
(22) Date of filing: 04.02.2022
(51) Int. Cl.: A23L 5/43

(54) **NATURAL GREEN COLORING COMPOSITIONS FOR FOODS, DRINKS AND PHARMACEUTICAL PRODUCTS**
NATÜRLICHE GRÜN FÄRBENDE ZUSAMMENSETZUNGEN FÜR LEBENSMITTEL, GETRÄNKE UND PHARMAZEUTISCHE PRODUKTE
COMPOSITIONS DE COLORATION VERTE NATURELLE POUR ALIMENTS, BOISSONS ET PRODUITS PHARMACEUTIQUES

(43) Date of publication of application: 09.08.2023
(73) Proprietor: Oterra A/S, 2970 Hørsholm (DK)
(72) Inventor: Ganivet, Luc, 2970 Hørsholm (DK); Drelon, Marie, 2970 Hørsholm (DK); Hervé, Jules, 2970 Hørsholm (DK); Goury, Laura, 2970 Hørsholm (DK)
(74) Representative: Willnegger, Eva

(56) References cited:
- WO-A1-2017/159949
- DE-A1- 4 200 349
- US-A1- 2011 177 202
- US-A1- 2018 242 607
- HE SIYU ET AL: "Insights into interaction of chlorophylls with sodium caseinate in aqueous nanometre-scale dispersion: color stability, spectroscopic, electrostatic, and morphological properties", RSC ADVANCES, vol. 9, no. 8, 5 February 2019 (2019-02-05), pages 4530-4538, XP055937076, DOI: 10.1039/C8RA09329F Retrieved from the Internet: URL:https://pubs.rsc.org/en/content/articl epdf/2019/ra/c8ra09329f>
- DATABASE GNPD [Online] MINTEL; 27 November 2013 (2013-11-27), anonymous: "Happy Green Milk Tea", XP055937219, Database accession no. 2234537

## Description

### FIELD OF THE INVENTION

The invention relates to the field of natural green coloring compositions for food applications. Chlorophylls are widely distributed in green fruits and vegetables. Therefore chlorophylls can be used as alternatives to artificial colorants through their brilliant green color. Cu-Chlorophyll provides stable green shades. However, Cu-Chlorophyll is not perceived as a natural colour. Consumers are more and more interested in entirely natural colouring compositions for food applications. But natural chlorophylls are raw materials that may contain impurities. This may negatively impact the stability of a natural coloring compositions. In particular, chlorophylls are very sensitive to environmental stresses. For example, browning effects can appear during production processes and in temperature-treated food matrixes. Therefore, there are limitations to the industrial application of chlorophylls as natural colorants.

WO2020210907 to Virentia Innovation discloses a plant macrofibre composition comprising Fabaceae family plant macrofibres and an antioxidant, the composition having a moisture content of about 50 wt. % to about 75 wt. %. However, this patent publication does not disclose natural green composition .

US2020164006A1 to Innovanutra discloses a composition comprising a carrier and a bioactive agent. The bioactive agent is incorporated into the carrier. Sugars from said mixture are preferentially excluded from said carrier. However, this patent publication does not disclose natural green composition. US 2011/177202 A1 discloses a carotinoid based food colouring composition comprising paprika oleoresin, polysorbate 60 , tocopherol, water, citric acid ester of mono- and diglycerides of edible fatty acids (E472c), vitamin C and potassium sorbate. Chlorophyll oleoresin is mentioned as alternative among other pigments.

Therefore, there still is a need for stable and heat-resistant natural green colouring compositions for food applications.

### SHORT DESCRIPTION OF THE INVENTION

The inventors have surprisingly found that formulated Mg-Chlorophyll oleoresin of spinach or alfalfa produces stable green shades in foods even when treated at higher or at lower temperatures. The inventors have further found, that such natural green coloring compositions may be stabilized through a natural emulsifier hydrocolloid such as lecithin and a natural antioxidant such as tocopherol. Finally, the inventors suggest a process for the manufacturing of such natural green coloring compositions for food applications.

Accordingly, a first aspect of the present invention is a natural green liquid coloring composition comprising:
▪ an oil phase comprising a chlorophyll oleoresin; and
▪ a continuous water phase comprising a casein compound as microencapsulating agent, wherein the natural green liquid coloring composition is an emulsion; and wherein the chlorophyll content of the natural green liquid coloring composition is from 0,2 w % or more as compared to the total weight of the composition.

In another aspect, the chlorophyll oleoresin is derived from alfalfa or spinach. In another aspect, the chlorophyll content of the composition is from 0,2 w% to 2 w%, preferably from 0,4 w% to 1 w% and even more preferably from 0,55 w% to 0,75 w%. In another aspect, the chlorophyll oleoresin is present in an amount of from 5 w% to 30%, preferably from 10 w% to 25 w%, even more preferably from 13 w% to 22 w% as compared to the total weight of the natural green liquid coloring composition.

In another aspect, the casein compound is native casein.

In another aspect, the casein compound is present in an amount of from 1 w% to 20 w%, preferably from 2 w% to 10 w%, even more preferably from 3 w% to 5 w% as compared to the total weight of the natural green liquid coloring composition.

In another aspect, the weight ratio of the chlorophyll oleoresin to the casein compound is from 1:1 to 10:1, preferably from 1:1 to 7:1, even more preferably from 1:1 to 5:1.

In another aspect, the oil phase further comprises an antioxidant.

In another aspect, the antioxidant is tocopherol.

In another aspect, the water phase further comprises an emulsifier.

In another aspect, the emulsifier is lecithin.

In another aspect, the oil phase further comprises a fat selected from the group consisting of sunflower seed oil, corn oil, soybean oil, olive oil, coconut oil, palm oil, palm kernel oil, groundnut oil, cottonseed oil, grape seed oil, rape seed oil, medium-chain triglyceride oils, and combinations thereof.

Another aspect of the invention is a method for manufacturing said natural green liquid coloring composition, comprising the steps of:
▪ dissolving the casein compound and optionally an emulsifier such as lecithin in water;
▪ heating the chlorophyll oleoresin optionally with an antioxidant;
▪ dispersing the heated oil phase in the aqueous phase;
▪ optionally homogenizing the dispersed liquid composition wherein the natural green liquid coloring composition is an emulsion; wherein the chlorophyll content of the natural green liquid coloring composition is from 0,2 w% or more as compared to the total weight of the composition.

Another aspect is a natural green liquid coloring composition which is obtained by the disclosed method of the invention.

Another aspect is the use of the natural green liquid coloring composition of the invention or obtained by the method of the invention for coloring foods, drinks or pharmaceutical products, in particular a pasta product, a bakery product or an ice cream.

Another aspect is a food, in particular a pasta product, a bakery product, dumpling products, rice balls products, cheese products or an ice cream, or drink or a pharmaceutical product, colored by the natural green liquid coloring composition of the invention or obtained by the method of the invention , wherein the natural green liquid coloring composition is present in an amount from 0,1 w% to 10 w%, preferably from 0,2 w% to 5 w%, even more preferably from 0,5 w% to 2 w% as compared to the total weight of the food product.

### SHORT DESCRIPTION OF THE DRAWINGS

Figure 1 shows the coloring performance of an exemplary natural green liquid coloring composition comprising Mg-Chlorophyll oleoresin microencapsulated by Ca-caseinate in cake (1B) as compared to the state of the art (1A).
Figure 2 shows the coloring performance of an exemplary natural green liquid coloring composition comprising Mg-Chlorophyll oleoresin microencapsulated by Ca-caseinate in ice cream (2B) as compared to the state of the art (2A).
Figures 3 show pasta colored with the natural green liquid coloring composition comprising Mg-Chlorophyll oleoresin microencapsulated by Ca-caseinate.
Figures 4 show rice balls colored with the natural green liquid coloring composition comprising Mg-Chlorophyll oleoresin microencapsulated by Ca-caseinate.
Figures 5 show dumplings colored with the natural green liquid coloring composition comprising Mg-Chlorophyll oleoresin microencapsulated by Ca-caseinate.
Figures 6 show milk colored with the natural green liquid coloring composition comprising Mg-Chlorophyll oleoresin microencapsulated by Ca-caseinate (6B) against natural green liquid coloring composition Mg-Chlorophyll oleoresin microencapsulated by modified starch (6A).

### DETAILED DESCRIPTION OF THE INVENTION

The invention is now described in further details.

The oil phase of the natural green liquid coloring composition comprises chlorophyll oleoresin.

### Chlorophyll

Chlorophyll is an oil soluble pigment. Chlorophyll may be obtained from Lucerne, nettle, spinach, alfalfa or grass, and preferably is obtained from alfalfa or spinach.

### Chlorophyll oleoresin

The chlorophyll oleoresin preferably is a Mg chlorophyll oleoresin.

In another embodiment, the chlorophyll oleoresin is not a Cu chlorophyll oleoresin.

The chlorophyll oleoresin is present in an amount of from 5 w% to 30%, preferably from 10 w% to 25 w%, even more preferably from 13 w% to 22 w% as compared to the total weight of the natural green liquid coloring composition.

### Chlorophyll content in the final composition

The natural green liquid coloring composition according to claim 1, wherein the chlorophyll content of the composition is from 0,2 w% to 2 w%, preferably from 0,4 w% to 1 w% and even more preferably from 0,55 w% to 0,75 w% as compared to the total weight of the composition.

### Casein compound

The casein compound may be natural native casein or modified casein, such as calcium caseinate. The casein compound serves as encapsulating agent for the chlorophyll oleoresin in the natural green liquid coloring composition of the present invention.

The casein compound is present in an amount of from 1 w% to 20 w%, preferably from 2 w% to 10 w%, even more preferably from 3 w% to 5 w% as compared to the total weight of the natural green liquid coloring composition.

In one embodiment, the ratio between the chlorophyll oleoresin and the casein compound is from 1:1 to 10:1, preferably from 1:1 to 7:1, even more preferably from 1:1 to 5:1.

### Antioxidant

The natural green liquid coloring composition may further comprise an antioxidant, such as tocopherol. The antioxidant typically is present in an amount of 0,1 w% to 10 w%, preferably from 0,5 w% to 5 w% and even more preferably form 1 w% to 3 w% as compared to the total weight of the natural green liquid coloring composition.

### Emulsifier

The natural green liquid coloring composition may further comprise an emulsifier, such as lecithin, preferably sunflower lecithin. The emulsifier typically is present in an amount of 0,01 w% to 1 w%, preferably from 0,05 w% to 0,5 w% and even more preferably form 0,07 w% to 0,3 w% as compared to the total weight of the natural green liquid coloring composition.

### Further ingredients

The natural green liquid coloring composition may further comprise further ingredients such as sugar. Sugar may be present in an amount of 10 w% to 50 w%, preferably from 20 w% to 40 w% and even more preferably from 25 w% to 35 w% as compared to the total weight of the natural green liquid coloring composition.

The skilled person is able to choose the quantity of the ingredients so that they add up to 100 w%.

### Method of manufacturing

The method for manufacturing the natural green liquid coloring composition comprises the steps of:
▪ dissolving the casein compound and optionally an emulsifier such as lecithin in water;
▪ heating the chlorophyll oleoresin optionally with an antioxidant;
▪ dispersing the heated oil phase in the aqueous phase; and
▪ optionally homogenizing the dispersed liquid composition, wherein the natural green liquid coloring composition is an emulsion; wherein the chlorophyll content of the natural green liquid coloring composition is from 0,2 w% or more as compared to the total weight of the composition.

### Use of the natural green liquid coloring composition for food applications

A further aspect of the present invention is the use of the natural green liquid coloring composition for coloring foods, drinks or pharmaceutical products, in particular a pasta product, a bakery product or an ice cream.

Finally, the present invention is directed to foods, drinks or pharmaceutical products, in particular a pasta product, a bakery product, a dumpling product, a rice ball, a cheese or an ice cream comprising or colored by the natural green liquid coloring composition, wherein the natural green liquid coloring composition is present in an amount from 0,1 w% to 10 w%, preferably from 0,2 w% to 5 w%, even more preferably from 0,5 w% to 2 w% as compared to the total weight of the food product.

### EXAMPLES

The following examples illustrate the natural green liquid coloring compositions further without, however, limiting the scope of the invention:

### 1. Exemplary compositions

The formulations shown in Table 1 have been tested.

**Table 1: Exemplary compositions of the invention in w%**

| **Exemplary natural green liquid coloring compositions, hereinafter referred to as recipe** | **1** | **2** | **3** | **4** | **5** |
|---|---|---|---|---|---|
| **Mg Chlorophyll Alfalfa** | 13 | 20 | 22 | | |
| **Mg Chlorophyll Spinach** | | | | 13 | 13 |
| **Water** | 48,2 | 43,2 | 43,2 | 48,2 | 48,2 |
| **Other ingredients** | 34,8 | 32,8 | 30,8 | 34,8 | 34,8 |
| **Ca caseinate** | 4 | 4 | 4 | 4 | |
| **Casein native** | | | | | 4 |
| **TOTAL** | 100 | 100 | 100 | 100 | 100 |

### 2. Manufacturing process and Analysis

### Process:

An oil phase containing a Mg-Chlorophyll oleoresin is dispersed in a water continuous phase.

### Water phase:

Casein compound is dissolved in water at 60°C, optionally with other ingredients in a range from 25 to 35% in order to optimize process conditions (for example viscosity) and to increase microbiological stability.

### Oil phase:

Mg-Chlorophyll oleoresin is heated to 70°C. Other ingredients can be optionally added up to 5% to limit oxidation.

### Emulsion:

The oil phase is dispersed in the water phase. The pH is adjusted to pH 10 with NaOH for microbiological reasons The mixture is then homogenized.

### Analysis

The pigment content in the composition is determined with a UV-spectrophotometer UV-1800 from Shimadzu by dissolving the formulation in water and then acetone at appropriate dilution. The total chlorophyll content is determined at the absorbance 647 nm (chlorophyll a) and 664,5 nm (chlorophyll b) respectively using 17,95 and 7,9 as extinction coefficients.

The lightness, chroma and hue are obtained with a Datacolor 650 in reflexion mode. All the compositions are analyzed in milk 1.5%fat.

### 3. Color stability after heat treatment - cake application

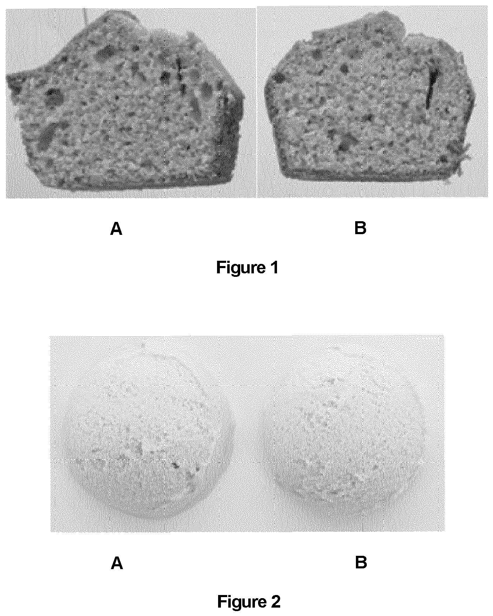

The performance of the natural coloring compositions of recipe 2 in cake is shown in Figures 1 against a comparative green reference (commercial product based on nettle and spinach concentrate). Cakes colored with the natural coloring compositions of recipe 2 gives an appealing green-yellow color shades, compared to the reference which is more green-bluish.

### Method:

- Mix 80g water and 0,45g potassium sorbate if required
- Add 55g of sunflower oil and color
- Add 150g of cake-mix (containing: sugar, wheat flour, wheat starch, whole egg powder, thickener: acetylated di-starch-phosphate, corn starch, raising agents : diphosphate / sodium carbonate, vegetable emulsifier E471, salt, flavour)
- Mix at medium speed with kitchen machine for 2 minutes
- Pour the dough into a greased form
- Bake the cakes in normal oven or convector oven at 180°C for 30 minutes

Figure 1A shows cake comprising 1,48% of market reference, which contains 0,4% of pigment.

Figure 1B shows cake comprising 1,11 % of recipe 2, which contains 0,54% of pigment.

### 4. Color stability - ice cream application

The green reference based on Cu-Chlorophyll gives a less bright and more green-greyish color shade than recipe 2 (Figures 2 A and B respectively). Indeed, the present invention shows a brighter and green-yellow color shade and a more intense green color, at same color content than the reference.

### Method:

- Weight the color into a beaker, add the Matilde Ice base and mix it well.
- Fill the colored solution into iwaki flasks.
- Take photos and perform color measurements using Datacolor 650 and CIE L*a*b*-system by the reflection modus.
- Afterwards fill the colored solution into the ice cream engine let it run for 45 minutes (overrun approx. 70 %) and freeze it for one night.
- Next day take again photos with the ice scoops.

Figure 2A shows ice cream comprising 0,99% of reference, which contains 0,4 w% of chlorophyll.

Figure 2B shows ice cream comprising 0,74% of recipe 2, which contains 0,54 w% of chlorophyll.

### 5. Color stability - cooked pasta application

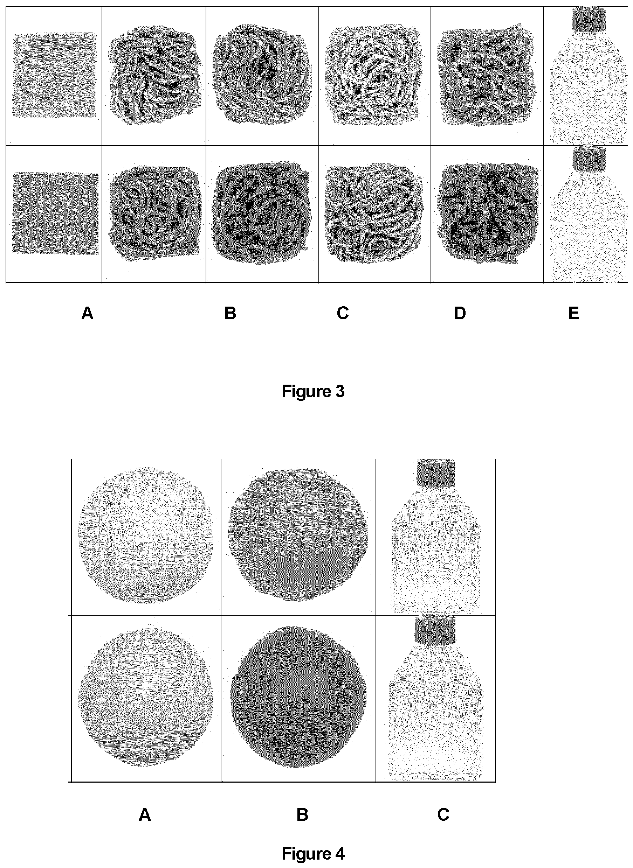

The performance of recipe 4 in pasta is shown in Figures 3 both uncooked (Figures 3A-B) and cooked (Figures 3C-D-E). Application tests with an amount of coloring composition of 0,5 w% are presented in top column, and the ones with an amount 1 w% in the lower column.

Nice green color shade in pasta is observed for all samples whatever the cooking process, especially when the dosage is 1 w%. Moreover, no color transfer was noticed in the cooked water, demonstrating the interesting color ability of recipe 4 in this application.

### Method of instant noodles:

- Weigh 300 grams of flour into the mixing bowl.
- Weigh salt, sodium carbonate, potassium carbonate and WS colors, and mix them together with the water.
- Start the mixer at low speed, and pour the liquid mixture into the flour in a steady stream over 1 minute.
- When the mixture has been incorporated into the flour, start the timer for 15 minutes.
- When mixing has completed after 15minutes, scoop out the dough and put it into a zip lock bag and allow the dough to rest for another 15 minutes. This is to allow the gluten network to strengthen.
- 15 minutes later, compress the dough in the zip lock by using a rolling pin to press the dough down and rolling over it several times until it becomes a thick compact sheet.
- Remove the compressed dough from the zip lock, and compound further by rolling it through the widest gap of the pasta machine.
- Fold the dough into half and put the dough crumbs in between and roll it through the machine. Do this for about 4-5 times until a neat sheet is achieved.
- When the neat sheet has been formed, start reducing the thickness of the sheet by adjusting the gap space gradually from 10 down to 0.
- By this time, the dough sheet would be long and thin.
- Mount the shredder onto the pasta machine and shred the dough sheet into noodle strands.
- For very long strands, cut the strands into desired lengths.
- Steam the noodles at 1 atmospheric pressure for 5 minutes.
- After steaming, weigh the noodles into 35g and fit them into the noodle cake moulds.
- Deep fry the noodles at 150°C for 2 minutes.
- Extract the noodle cakes from the moulds and rack them to dry and cool down.
- Air dry the noodles in oven at 80C for 30mins.

Figure 3A shows the pasta dough prior to cooking.

Figure 3B shows row noodles prior to cooking.

Figure 3C shows steamed pasta.

Figure 3D fried pasta.

Figure 3E shows boiled pasta.

### 6. Color stability - cooked rice balls application

The performance of recipe 4 in rice balls is shown in Figures 4 both uncooked (Figure 4 A) and cooked (Figure 4B). Application tests with an amount of coloring composition of 0,5 w% are presented in top column, and the ones with an amount 1 w% in the lower column.

Nice green color shade in rice balls is observed for all samples, especially when the dosage is 1w%. Moreover, no color transfer was noticed in the cooked water, demonstrating the interesting color ability of recipe 4 in this application.

### Method of rice balls:

- Weigh the glutinous rice flour into the mixing bowl.
- Weigh the color and add purified water 1 into beaker #1, then mix well.
- Add color and purified water 1 into glutinous rice.
- Weigh out the purified water 2 into a small beaker #2 and try to wash out all the color in beaker #1.
- Mix color solution and glutinous rice flour evenly and check if there are any color spots.

### Method of cooking:

- Add 500ml tap water into a pot.
- Set the pot on the induction cooker at high power.
- Add one rice balls into pot when the water is boiling.
- Reduce the power of induction cooker and keep boiling.
- Set a timer as 5 minutes.
- Scoop up the rice balls once the timer is up and pour out the cooked water.
- Take photographs of cooked rice balls and cooked water to see if any color leaches out into the water.

Figure 4A shows the raw rice ball prior to cooking.

Figure 4B shows the cooked rice ball.

Figure 4C shows cooked water.

### 7. Color stability - dumplings application

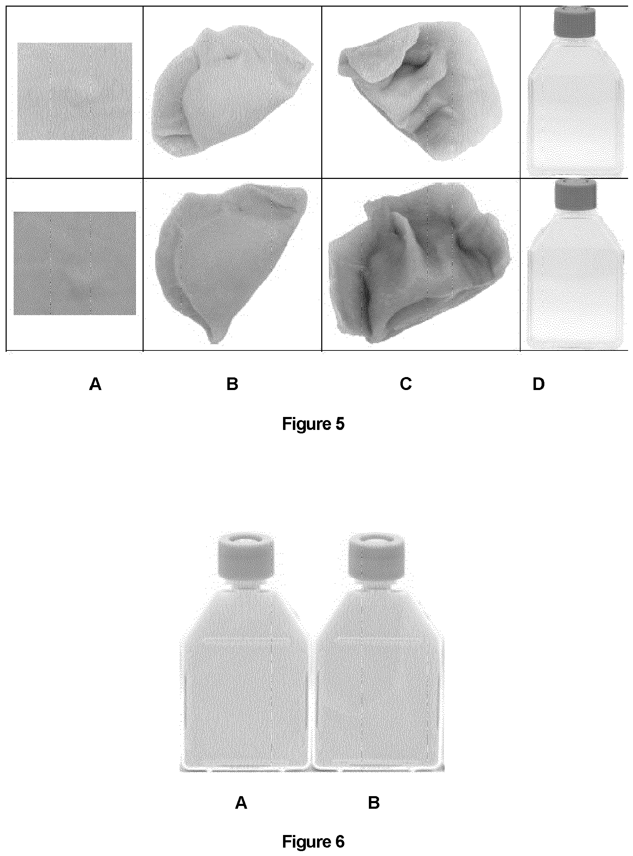

The performance of recipe 4 in dumplings is shown in Figures 5 both uncooked (Figure 5B) and cooked (Figures 5C). Application tests with an amount of coloring composition of 0,5 w% are presented in top column, and the ones with an amount 1 w% in the lower column.

Nice green color shade in dumpling is observed for all samples, especially when the dosage is 1 w%. Moreover, no color transfer was noticed in the cooked water, demonstrating the interesting color ability of recipe 4 in this application.

### Method of dumpling:

- Weigh the flour into the mixing bowl of kitchen acid and add the salt
- Add the color + water into the flour and mixing with the kitchen aid on speed 2 using the dough hook
- Turn the speed to speed 4 and let the dough mix evenly
- Mix until the dough forms into a ball
- Using the rolling pin, roll out the dough into a big sheet roughly
- Using a round shaped cookie cutter/mould e.g. glass, cut out the dough into uniform round pieces.
- Make the dumplings with the round pieces, sprinkle flour onto the dumplings to avoid stick to each other.
- The dumplings were frozen individually to avoid the dumplings from stick together.

### Method of cooking:

- Add 500ml water into a pot
- Add 1 pinch of salt to the water.
- Set the pot on the induction cooker at high power.
- Once the Water is boiling, reduce the power of the induction cooker so it remains boiling.
- Add 1 dumpling to the water and start the timer for 6 minutes. Ensure that the dumpling does not stick to the bottom of the pot.
- Once the timer is up, scoop up the dumpling and let it cool

Figure 5A shows the raw wrapper.

Figure 5B shows the raw dumpling.

Figure 5C shows the cooked dumpling.

Figure 5D shows the cooked water.

### 8. Comparative examples with hydrocolloïds

### Compositions

Hydrocolloids were used instead of casein compound to stabilize the composition . All recipes were processed following the different steps below. The formulations shown in Table 2 have been tested but not approved in applications.

**Table 2: Formulation recipes with hydrocolloids.**

| **Comparative examples** | **6** | **7** |
|---|---|---|
| | **MgC19 116A** | **MgC19 361** |
| **Mg Chlorophyll Alfalfa** | 8 | 7,5 |
| **Water** | 46 | 50,5 |
| **Other ingredients** | 26 | 22 |
| **Modified starch** | 20 | |
| **Arabic gum** | | 20 |
| **TOTAL** | 100 | 100 |

### Manufacturing process

An oil phase containing a Mg-Chlorophyll oleoresin is dispersed in a water continuous phase.

### Water phase:

Hydrocolloid is dissolved in water between 40 and 60°C, optionally with other ingredients

### Oil phase:

Mg-Chlorophyll oleoresin is heated to 70°C. Other ingredients can be optionally added.

### Emulsion:

The oil phase is dispersed in the water phase. The pH is adjusted to pH 10 with NaOH. The mixture is then homogenized.

### Color stability - milk application

The performance of the recipe 6 in milk is compared to recipe 1 in Figures 6, at same pigment content.

Milk colored with the natural coloring composition of example 1 gave a brighter green color shade compared to recipe 6, with hue values of 111,31 and 107,66, respectively. Recipe 6 in milk tends to grey shades (Figure 6A). The Chroma of recipe 6 is duller than recipe 1, with values of 27,07 and 23,36, respectively (Table 3).

**Table 3: LCh values of recipes 1 and 6 in milk.**

| | L | C | h | De2000 |
|---|---|---|---|---|
| Recipe 1 | 75,05 | 27,07 | 111,31 | - |
| Recipe 6 | 77,52 | 23,36 | 107,66 | 2,88 |

Figure 6A shows milk comprising 0,86% of recipe 6.

Figure 6B shows milk comprising 0,53% of recipe 1.

The lightness, chroma and hue are obtained with a Datacolor 650 in reflexion mode. All the recipes are analyzed in semi skimmed milk.

## Claims

1. A natural green liquid coloring composition comprising:
a) an oil phase comprising a chlorophyll oleoresin; and
b) a continuous water phase comprising a casein compound as microencapsulating agent,
wherein the natural green liquid coloring composition is an emulsion; and
wherein the chlorophyll content of the natural green liquid coloring composition is from 0,2 w% or more as compared to the total weight of the composition.

2. The natural green liquid coloring composition according to claim 1, wherein the chlorophyll oleoresin is derived from alfalfa or spinach.

3. The natural green liquid coloring composition according to claim 1, wherein the chlorophyll content of the composition is from 0,4 w% to 1 w% and even more preferably from 0,5 w% to 0,8 w% as compared to the total weight of the composition.

4. The natural green liquid coloring composition according to any of the preceding claims, wherein the chlorophyll oleoresin is present in an amount of from 5 w% to 30 w%, preferably from 10 w% to 25 w%, even more preferably from 12.5 w% to 22.5 w% as compared to the total weight of the natural green liquid coloring composition.

5. The natural green liquid coloring composition according to any of the preceding claims, wherein the casein compound is casein native.

6. The natural green liquid coloring composition according to any of the preceding claims, wherein the casein compound is present in an amount of from 1 w% to 20 w%, preferably from 2 w% to 10 w%, even more preferably from 3 w% to 5 w% as compared to the total weight of the natural green liquid coloring composition.

7. The natural green liquid coloring composition according to any of the preceding claims, wherein the ratio between the chlorophyll oleoresin and the casein compound is from 1:1 to 10:1, preferably from 1:1 to 7:1, even more preferably from 1:1 to 5:1.

8. The natural green liquid coloring composition according to any of the preceding claims, wherein the oil phase further comprises an antioxidant.

9. The natural green liquid coloring composition according to any of the preceding claims, wherein the antioxidant is tocopherol.

10. The natural green liquid coloring composition according to any of the preceding claims, wherein the water phase further comprises an emulsifier.

11. The natural green liquid composition according to any of the preceding claims, wherein the emulsifier is lecithin.

12. A method for manufacturing a natural green liquid coloring according to any one of claims 1-11 comprising the steps of:
a. dissolving the casein compound and optionally an emulsifier such as lecithin in water;
b. heating the chlorophyll oleoresin optionally with an antioxidant;
c. dispersing the heated oil phase in the aqueous phase;
d. optionally homogenizing the dispersed liquid composition
wherein the natural green liquid coloring composition is an emulsion;
wherein the chlorophyll content of the natural green liquid coloring composition is from 0,2 w% or more as compared to the total weight of the composition.

13. The use of the natural green liquid coloring emulsion of any of the preceding claims 1 to 11 or obtained by the method according to claim 12 for coloring foods, drinks or pharmaceutical products, in particular a pasta product, a bakery product, a dumpling product, a rice ball, a cheese, petfood product, plant based productor an ice cream.

14. A food, in particular a pasta product, a bakery product, a dumpling product, a rice ball, a cheese, a petfood product, plant-based product or an ice cream, or drink or a pharmaceutical product, colored by the natural green liquid coloring composition of any of claims 1 to 11 or obtained by the method according to claim 12,
Wherein the natural green liquid coloring composition is present in an amount from 0,1 w% to 10 w%, preferably from 0,2 w% to 5 w%, even more preferably from 0,5 w% to 2 w% as compared to the total weight of the food product.

## Patentansprüche

1. Natürliche grüne flüssige Farbzusammensetzung, umfassend:
a) eine Ölphase, die ein Chlorophyll-Oleoresin enthält; und
b) eine kontinuierliche Wasserphase, die eine Caseinverbindung als mikroverkapselndes Mittel enthält,
wobei die natürliche grüne flüssige Farbzusammensetzung eine Emulsion ist; und
wobei der Chlorophyllgehalt der natürlichen grünen Farbzusammensetzung 0,2 Gew.-% oder mehr im Vergleich zum Gesamtgewicht der Zusammensetzung beträgt.

2. Natürliche grüne flüssige Farbzusammensetzung nach Anspruch 1, wobei das Chlorophyll-Oleoresin aus Alfalfa oder Spinat gewonnen wird.

3. Natürliche grüne flüssige Farbzusammensetzung nach Anspruch 1, wobei der Chlorophyllgehalt der Zusammensetzung von 0,4 Gew.-% bis 1 Gew.-% und noch bevorzugter von 0,5 Gew.-% bis 0,8 Gew.-%, bezogen auf das Gesamtgewicht der Zusammensetzung, beträgt.

4. Natürliche grüne flüssige Farbzusammensetzung nach einem der vorhergehenden Ansprüche, wobei das Chlorophylloleoresin in einer Menge von 5 Gew.-% bis 30 Gew.-%, vorzugsweise von 10 Gew.-% bis 25 Gew.-%, noch bevorzugter von 12,5 Gew.-% bis 22,5 Gew.-%, bezogen auf das Gesamtgewicht der natürlichen grünen flüssigen Farbzusammensetzung, vorhanden ist.

5. Natürlich grüne flüssige Farbzusammensetzung nach einem der vorhergehenden Ansprüche, wobei die Caseinverbindung natives Casein ist.

6. Natürliche grüne flüssige Färbezusammensetzung nach einem der vorhergehenden Ansprüche, wobei die Caseinverbindung in einer Menge von 1 Gew.-% bis 20 Gew.-%, vorzugsweise von 2 Gew.-% bis 10 Gew.-%, noch bevorzugter von 3 Gew.-% bis 5 Gew.-%, bezogen auf das Gesamtgewicht der natürlichen grünen flüssigen Färbezusammensetzung, vorhanden ist.

7. Natürliche grüne flüssige Farbzusammensetzung nach einem der vorhergehenden Ansprüche, wobei das Verhältnis zwischen dem Chlorophyll-Oleoresin und der Kaseinverbindung von 1:1 bis 10:1, vorzugsweise von 1:1 bis 7:1, noch bevorzugter von 1:1 bis 5:1 beträgt.

8. Natürliche grüne flüssige Farbzusammensetzung nach einem der vorhergehenden Ansprüche, wobei die Ölphase außerdem ein Antioxidans enthält.

9. Natürliche grüne flüssige Färbezusammensetzung nach einem der vorhergehenden Ansprüche, wobei das Antioxidans Tocopherol ist.

10. Natürliche grüne flüssige Farbzusammensetzung nach einem der vorhergehenden Ansprüche, wobei die Wasserphase außerdem einen Emulgator enthält.

11. Natürliche grüne flüssige Farbzusammensetzung nach einem der vorhergehenden Ansprüche, wobei der Emulgator Lecithin ist.

12. Verfahren zur Herstellung einer natürlichen grünen flüssigen Farbzusammensetzung nach einem der Ansprüche 1 bis 11, umfassend die folgenden Schritte:
a. Auflösen der Caseinverbindung und gegebenenfalls eines Emulgators wie Lecithin in Wasser;
b. Erhitzen des Chlorophyll-Oleoresins, gegebenenfalls mit einem Antioxidationsmittel;
c. Dispergieren der erhitzten Ölphase in der wässrigen Phase;
d. gegebenenfalls Homogenisierung der dispergierten flüssigen Zusammensetzung
wobei die natürlich grüne flüssige Färbezusammensetzung eine Emulsion ist;
wobei der Chlorophyllgehalt der natürlichen grünen flüssigen Färbezusammensetzung 0,2 Gew.-% oder mehr, bezogen auf das Gesamtgewicht der Zusammensetzung, beträgt.

13. Verwendung der natürlichen grüne grüne flüssige n Farbemulsion nach einem der vorhergehenden Ansprüche 1 bis 11 oder erhalten durch das Verfahren nach Anspruch 12 zum Färben von Lebensmitteln, Getränken oder pharmazeutischen Produkten, insbesondere eines Teigwarenprodukts, eines Backwarenprodukts, eines Knödelprodukts, eines Reisballs, eines Käses, eines Tierfutterprodukts, eines Produkts auf Pflanzenbasis oder einer Eiscreme.

14. Lebensmittel, insbesondere ein Teigwarenprodukt, ein Backwarenprodukt, ein Knödelprodukt, ein Reisbällchen, ein Käse, ein Tiernahrungsprodukt, ein Produkt auf pflanzlicher Basis oder ein Speiseeis oder ein Getränk oder ein pharmazeutisches Produkt, gefärbt durch die natürliche grüne flüssige Färbezusammensetzung nach einem der Ansprüche 1 bis 11 oder erhalten durch das Verfahren nach Anspruch 12,
Wobei die natürliche grüne flüssige Färbezusammensetzung in einer Menge von 0,1 Gew.-% bis 10 Gew.-%, vorzugsweise von 0,2 Gew.-% bis 5 Gew.-%, noch bevorzugter von 0,5 Gew.-% bis 2 Gew.-%, bezogen auf das Gesamtgewicht des Lebensmittelprodukts, vorhanden ist.

## Revendications

1. Composition liquide colorante verte naturelle comprenant :
a) une phase huileuse comprenant une oléorésine de chlorophylle ; et
b) une phase aqueuse continue comprenant un composé de caséine comme agent de microencapsulation,
dans laquelle la composition colorante liquide vert naturel est une émulsion ; et
dans laquelle la teneur en chlorophylle de la composition colorante liquide verte naturelle est de 0,2 % ou plus par rapport au poids total de la composition .

2. Composition liquide colorante verte naturelle selon la revendication 1, dans laquelle l'oléorésine de chlorophylle est dérivée de la luzerne ou des épinards.

3. Composition liquide colorante verte naturelle selon la revendication 1, dans laquelle la teneur en chlorophylle de la composition est comprise entre 0,4 % et 1 % et, de préférence, entre 0,5 % et 0,8 % par rapport au poids total de la composition.

4. Composition liquide colorante verte naturelle selon l'une des revendications précédentes, dans laquelle l'oléorésine de chlorophylle est présente dans une quantité de 5 % à 30 %, de préférence de 10 % à 25 %, de préférence encore de 12,5 % à 22,5 % par rapport au poids total de la composition colorante liquide verte naturelle.

5. Composition liquide colorante verte naturelle selon l'une des revendications précédentes, dans laquelle le composé de caséine est de la caséine native.

6. Composition liquide colorante verte naturelle selon l'une des revendications précédentes, dans laquelle le composé de caséine est présent dans une quantité de 1 % à 20 %, de préférence de 2 % à 10 %, de préférence encore de 3 % à 5 % par rapport au poids total de la composition colorante liquide verte naturelle.

7. Composition liquide colorante verte naturelle selon l'une des revendications précédentes, dans laquelle le rapport entre l'oléorésine de chlorophylle et le composé de caséine est de 1:1 à 10:1, de préférence de 1:1 à 7:1, de préférence encore de 1:1 à 5:1.

8. Composition liquide colorante verte naturelle selon l'une des revendications précédentes, dans laquelle la phase huileuse comprend en outre un antioxydant.

9. Composition liquide colorante verte naturelle selon l'une des revendications précédentes, dans laquelle l'antioxydant est le tocophérol.

10. Composition liquide colorante verte naturelle selon l'une des revendications précédentes, dans laquelle la phase aqueuse comprend en outre un émulsifiant.

11. Composition liquide verte naturelle selon l'une des revendications précédentes, dans laquelle l'émulsifiant est la lécithine.

12. Procédé de fabrication d'une composition liquide colorante verte naturelle selon l'une des revendications 1 à 11, comprenant les étapes suivantes :
a. dissolution dans l'eau du composé de caséine et éventuellement d'un émulsifiant tel que la lécithine ;
b. chauffer l'oléorésine de chlorophylle, éventuellement avec un antioxydant ;
c. dispersion de la phase huileuse chauffée dans la phase aqueuse ;
d. éventuellement homogénéiser la composition liquide dispersée
dans laquelle la composition colorante liquide vert naturel est une émulsion
dans laquelle la teneur en chlorophylle de la composition colorante liquide verte naturelle est de 0,2 % ou plus par rapport au poids total de la composition.

13. Utilisation de l'émulsion liquide colorante vert naturel de l'une quelconque des revendications précédentes 1 à 11 ou obtenue par le procédé selon la revendication 12 pour colorer des aliments, des boissons ou des produits pharmaceutiques, en particulier un produit de pâtes alimentaires, un produit de boulangerie, un produit de boulettes, une boule de riz, un fromage, un produit pour animaux de compagnie, un produit à base de plantes ou une crème glacée.

14. Aliment, en particulier une pâte alimentaire, un produit de boulangerie, un produit de boulettes, une boule de riz, un fromage, un produit pour animaux de compagnie, un produit à base de plantes ou une crème glacée, ou une boisson ou un produit pharmaceutique, coloré par la composition liquide colorante vert naturel de l'une quelconque des revendications 1 à 11 ou obtenu par le procédé selon la revendication 12
Dans laquelle la composition colorante liquide verte naturelle est présente dans une proportion allant de 0,1 % à 10 %, de préférence de 0,2 % à 5 %, de préférence encore de 0,5 % à 2 % par rapport au poids total du produit alimentaire.
